# FASCICULE DE BREVET EUROPEEN

(11) **EP 4 337 430 B1**
(45) Date de publication et mention de la délivrance du brevet: **18.02.2026**
(21) Numéro de dépôt: 22727381.0
(22) Date de dépôt: 10.05.2022
(51) Int. Cl.: B25J 15/00, B29C 70/54, B25J 15/06, B29C 70/38

(54) **TÊTE DE PRÉHENSION, NOTAMMENT POUR L'APPLICATION D'UN PATCH SUR UNE SURFACE À DRAPER**
GREIFKOPF, INSBESONDERE ZUM AUFBRINGEN EINES PATCHES AUF EINE ABZUDECKENDE FLÄCHE
GRIPPING HEAD, IN PARTICULAR FOR APPLYING A PATCH TO A SURFACE TO BE DRAPED

(30) Priorité: 10.05.2021 FR 2104937
(43) Date de publication de la demande: 20.03.2024
(73) Titulaire: Safran Nacelles, 76700 Gonfreville-l'Orcher (FR)
(72) Inventeur: VENTURE, Renaud, 77550 MOISSY CRAMAYEL (FR); PROVOST, Benjamin, 77550 MOISSY CRAMAYEL (FR); ROLLAND, Clément, 77550 MOISSY CRAMAYEL (FR); LEBEGUE, Maxime, 77550 MOISSY CRAMAYEL (FR)
(74) Mandataire: Casalonga
(86) Numéro de dépôt international: PCT/FR2022/050895
(87) Numéro de publication internationale: WO 2022/238655

(56) Documents cités:
- DE-A1- 102015 210 316
- US-A1- 2020 223 073
- US-A1- 2020 361 163
- US-A1- 2021 053 230

## Description

La présente invention concerne la préhension ou la manipulation de pièces et notamment la préhension et le dépôt de patchs sur un support lors de la fabrication des pièces composites.

L'invention concerne plus particulièrement une tête de préhension pour la préhension et le dépôt d'un patch sur un support lors de la fabrication de pièces composites.

Des tètes de préhension selon l'art antérieur sont connu des documents US 2020/361163 A1, US 2021/053230 A1, DE 10 2015 210316 A1 et US 2020/223073 A1.

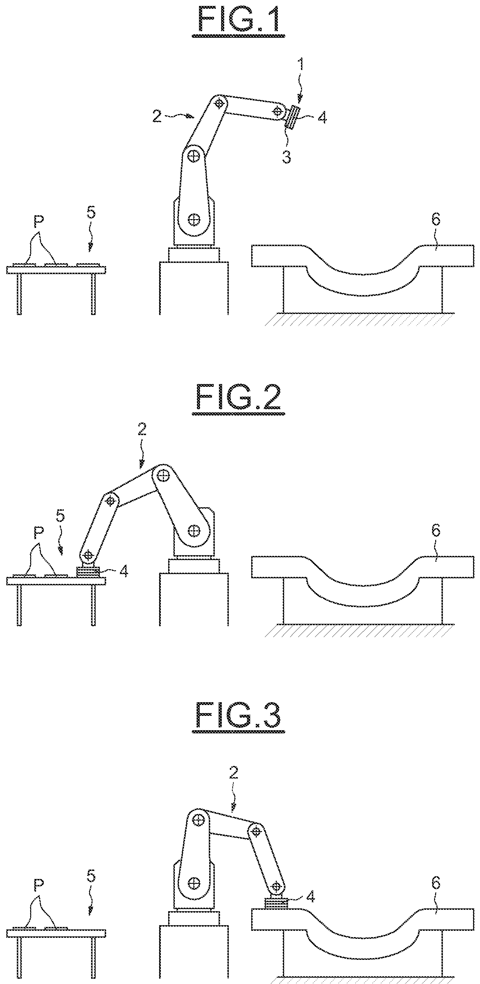

En référence à la figure 1, une tête de préhension 1 d'une machine automatique de drapage dite « pick and place » comprend classiquement un effecteur monté sur un porteur 2 qui est constitué par exemple par un bras robotisé, ou qui est commandé par une machine à commande numérique.

L'effecteur comporte généralement un support rigide 3 qui vient se fixer à l'extrémité du porteur de la machine et une pièce de matériau élastiquement déformable 4 montée sur le support rigide et dotée de canaux traversant ou d'alvéoles, dans lequel une dépression est créée pour saisir le patch par aspiration.

La machine de drapage est généralement programmée pour commander le déplacement et le fonctionnement de la tête de préhension, pour que, lors d'une première étape, illustrée sur la figure 2, elle saisisse un patch P sur un dispositif de mise à disposition 5, par exemple, une table d'approvisionnement, un tapis roulant ou un système à tiroirs, pour que, lors d'une deuxième étape illustrée à la figure 3, le porteur déplace la tête de préhension jusqu'au support à draper 6 et le patch soit déposé sur une surface cible du support et pour que, lors d'une troisième étape, le porteur se retire et le patch soit détaché de la tête de préhension 1.

Lors de l'application du patch sur la surface cible, le porteur exerce une pression en compactant la pièce de matériau élastique déformable de manière à chasser l'air, garantir le conformage du patch selon la forme de la surface cible et obtenir une adhésion suffisante du patch afin qu'il se détache de la tête de préhension lors du retrait du porteur.

Les spécificités de forme des supports à draper peuvent nécessiter des mouvements particuliers du porteur afin que toute la surface du patch soit appliquée contre la surface cible.

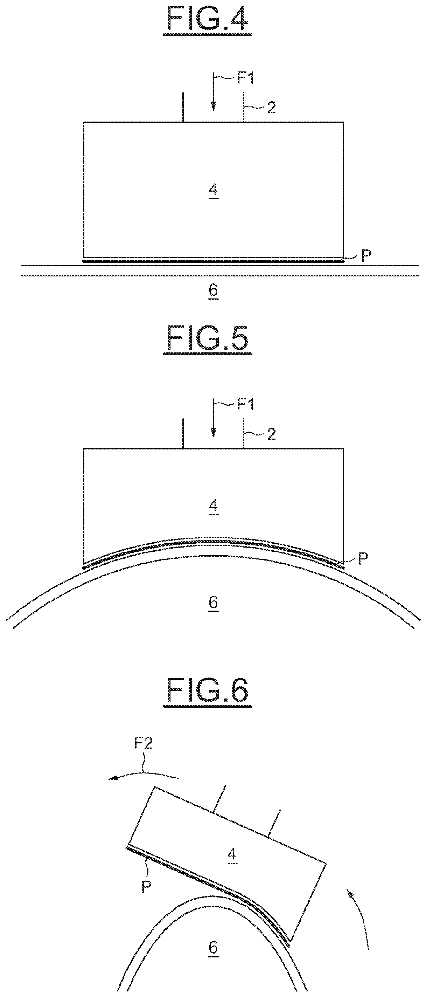

En référence aux figures 4 et 5, lorsque la surface cible est plane ou présente une convexité avec un rayon de courbure relativement important, l'approche de l'effecteur s'effectue selon une direction normale à la surface cible (flèches F1).

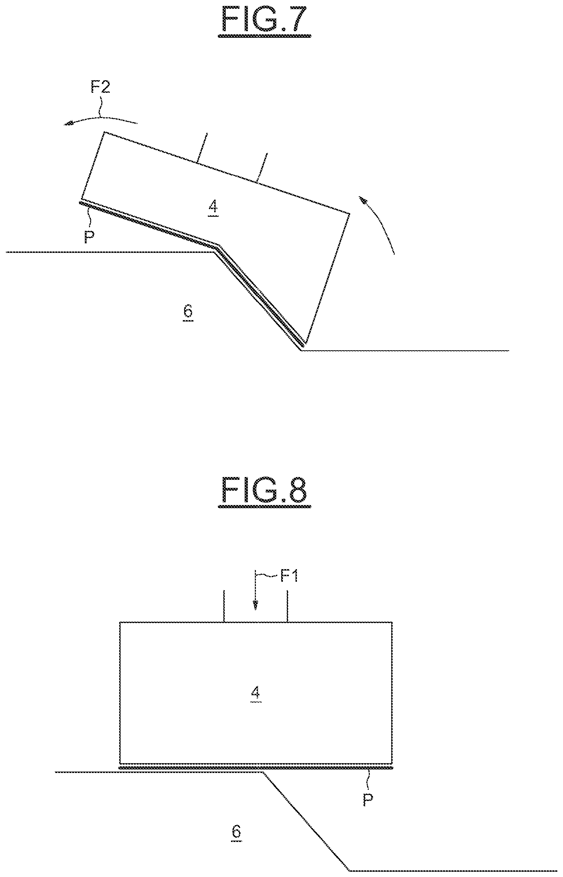

En référence aux figures 6 à 8, lorsque la surface cible à draper est convexe avec un rayon de courbure relativement faible, ou lorsque la surface à draper présente un chanfrein, la tête de préhension doit exécuter un mouvement de rotation selon un axe parallèle à la surface cible de manière à développer le patch sur la surface.

L'effecteur est approché de la surface cible selon une direction normale à sa surface cible puis est commandé en rotation pour provoquer l'application du patch contre la surface de la pièce (flèches F2).

La cinématique du porteur doit donc être adaptée en fonction des spécificités de forme de la surface cible. Des contraintes additionnelles se posent selon la nature du matériau de la pièce à draper, qui peut être notamment en matériau métallique, en polymère, en matériau thermoplastique, en carbone, ou en verre, ...

Lors du fonctionnement de la tête de préhension, le maintien correct du patch doit être garantit pendant toute la phase d'application du patch sur la surface cible. Au contraire, lors du retrait du porteur, le patch doit se détacher aisément de la pièce de matériau déformable afin de rester appliqué sur la surface cible, sans irrégularité de surface.

Lorsque la forme de la surface cible est telle qu'elle nécessite de déplacer la tête de préhension selon un mouvement comprenant une composante de rotation, l'aspiration ou succion du patch peut être coupée après que le patch ait été appliqué contre une portion de la surface cible, avant le mouvement de rotation de la tête. Dans ce cas, le patch, qui n'est plus maintenu par la tête de préhension, tombe directement sur la zone non revêtue de la surface cible, ce qui est susceptible d'entraîner des plis.

La succion peut encore être coupée en fin de mouvement de rotation. Dans ce cas, le patch est susceptible de rester appliqué contre la pièce de matériau déformable lors du mouvement de rotation, et donc de se détacher de la surface sur laquelle il a été appliqué en début du mouvement de rotation.

Le but de l'invention est donc de pallier ces inconvénients et de proposer une tête de préhension pour la préhension d'une pièce garantissant l'application correcte de la pièce sur une surface cible, en particulier lorsque la surface cible présente des spécificités de forme nécessitant un mouvement de la tête de préhension comprenant une composante de rotation.

L'invention a donc pour objet, selon un premier aspect, une tête de préhension pour la préhension d'une pièce et le dépôt de la pièce sur une surface cible, comprenant une chambre de succion délimitant au moins un secteur de succion et raccordée à au moins une prise d'aspiration et une pièce de matériau élastiquement déformable configurée pour la préhension de la pièce sous l'effet d'une dépression créée par ladite chambre de succion.

La pièce de matériau élastiquement déformable comporte des zones de préhension activables sélectivement, la tête de préhension comportant des moyens pour activer sélectivement les zones de préhension.

Selon une autre caractéristique, la chambre de succion comprend plusieurs secteurs de succion séparés raccordés chacun à une prise d'aspiration, les secteurs de succion étant séparés par des cloisons étanches.

Dans un autre mode de réalisation, les chambres de succion comportent plusieurs secteurs de succion séparés par des clapets pilotés à l'ouverture et à la fermeture pour sélectivement mettre en communication les secteurs de succion.

Selon encore une autre caractéristique de la tête de préhension, le ou chaque secteur de succion est raccordé à au moins une prise de surpression.

Selon l'invention, la pièce de matériau élastiquement déformable comporte un réseau de canaux en communication avec la chambre de succion.

Chaque canal est doté d'un clapet sélectivement piloté à l'ouverture et à la fermeture.

Avantageusement, la tête de préhension comporte un ensemble d'au moins un élément de mesure de la pression d'application de la tête de préhension sur la surface cible pour l'asservissement de la pression d'application de la tête de préhension.

Dans un mode de réalisation, les moyens pour activer sélectivement les zones de préhension comportent des moyens pour sélectivement activer les zones de préhension en fonction de la pression régnant dans les secteurs de succion.

On peut encore prévoir que les moyens pour activer sélectivement les zones de préhension comportent des moyens pour sélectivement activer lesdits secteurs de succion à partir de données de pilotage de la tête de succion.

Dans ce cas, les moyens pour activer sélectivement les zones de préhension peuvent comporter des moyens pour sélectivement activer les secteurs de succion en fonction de la position de la tête ou de la configuration de la pièce.

L'invention a également pour objet, selon un autre aspect, une machine de drapage de pièces à draper qui comporte une tête de drapage telle que définie ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1],
[Fig 2],
[Fig 3],
[Fig 4],
[Fig 5],
[Fig 6],
[Fig 7] et
[Fig 8] dont il a déjà été fait mention, illustrent la cinématique d'une tête de drapage selon l'état de la technique pour diverses formes de la surface cible d'une pièce à draper ;
[Fig 9] est une vue schématique d'une tête de préhension conforme à l'invention ;
[Fig 10] est une vue en coupe longitudinale d'un premier mode de réalisation de la tête de préhension de la figure 9 ;
[Fig 11] est une vue en coupe longitudinale d'un deuxième mode de réalisation d'une tête de préhension conforme à l'invention ;
[Fig 12] est une vue en coupe longitudinale d'un troisième mode de réalisation d'une tête de préhension conforme à l'invention ; et
[Fig 13] illustre un quatrième mode de réalisation d'une tête de préhension conforme à l'invention.

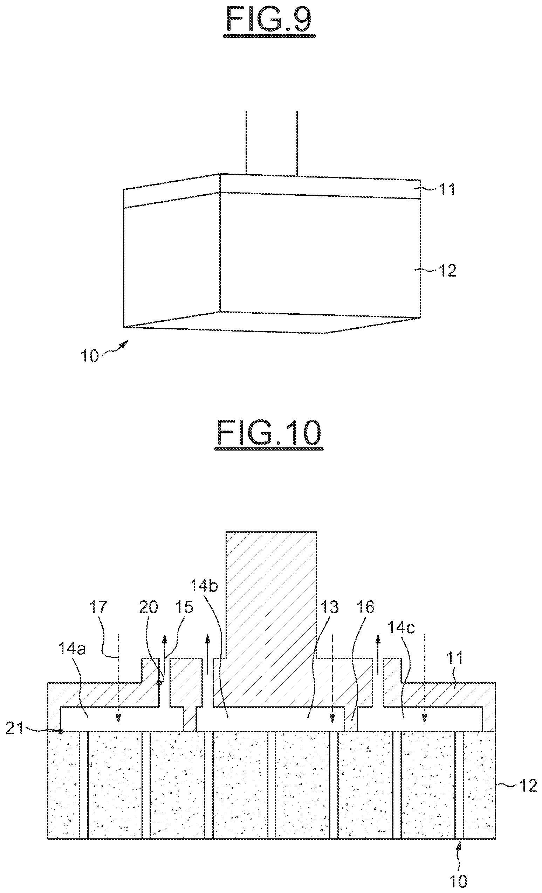

On a représenté sur la figure 9 un exemple de réalisation d'une tête de préhension conforme à l'invention, désignée par la référence numérique générale 1.

Cette tête de préhension est, de manière générale, destinée à saisir une pièce et à la déposer sur une surface cible.

Dans le mode de réalisation décrit, cette tête est destinée à la préhension d'un patch en matériau fibreux pré-imprégné ou non, ou non fibreux, et au dépôt du patch sur un support, lors de la fabrication de pièces composites.

Cette tête de préhension constitue un effecteur destiné à être monté à l'extrémité d'un porteur d'une machine automatique de drapage tel qu'un bras robotisé ou commandé par une machine à commande numérique. La tête est pilotée pour qu'elle saisisse, par succion, un patch, à partir d'un dispositif de mise à disposition, telle qu'une table d'approvisionnement, un tapis roulant, ou un système à tiroirs, qu'elle dépose le patch sur une surface cible d'un support à draper, après déplacement de la tête de préhension sous l'action du porteur, et qu'elle relâche ou détache le patch, après application du patch sur la surface cible.

La machine de drapage est programmée de manière à réaliser automatiquement ces diverses opérations et commander le mouvement du porteur et de la tête de préhension selon une cinématique qui dépend de la forme de la surface cible, en particulier lorsque la surface cible comporte une convexité ou une surface angulaire nécessitant un déplacement de la tête de préhension selon un mouvement comprenant une composante de rotation autour d'un axe parallèle à la surface de la surface cible ou perpendiculaire à la normale à cette surface.

Le support à draper sur lequel les patchs sont appliqués peut être constitué par tout type de support et notamment un moule de polymérisation, en matériau métallique ou polymérique, des patchs préalablement appliqués, polymérisés ou non, ou encore des matériaux d'âme tels que des nids d'abeille, par exemple en aluminium ou en fibres synthétiques, ou des mousses polymères.

Les patchs sont par exemple des patchs de matériau fibreux, sec, c'est-à-dire non imprégnés de résine, poudreux, c'est-à-dire ayant une charge particulaire, ou préimprégnés de résine.

La tête de préhension 10 comporte un support rigide 11 par lequel la tête vient se monter sur le porteur et un bloc 12 de matière élastiquement déformable solidaire du support 11, ce bloc étant réalisé en mousse poreuse ou doté de canaux traversants s'étendant du support 11 à la face d'extrémité active du bloc 12.

En référence à la figure 10, le support rigide 11 comporte intérieurement une chambre de succion 13 comprenant intérieurement un ou plusieurs secteurs de succion 14a, 14b et 14c et, selon la configuration de la chambre de succion 13, une ou plusieurs prises d'aspiration 15 pour sélectivement mettre en communication chaque secteur de succion 14a, 14b et 14c avec un dispositif de succion (non représenté) de sorte que la face d'extrémité active de la tête de préhension comporte des zones de préhension qui soient sélectivement activables afin qu'un patch puisse être localement maintenu par la tête de préhension tout en pouvant être libéré à d'autres zones de préhension.

En d'autres termes, en fonction de la dépression créée dans les secteurs de succion, les alvéoles ou canaux d'une ou de plusieurs zones de préhension peuvent être soumis à une dépression pour localement saisir une zone d'un patch tandis que les canaux ou alvéoles d'une ou plusieurs autres zones de préhension du préhenseur peuvent être soumis à la pression atmosphérique ou à une surpression pour localement détacher une autre zone du patch.

Dans le mode de réalisation de la figure 10, le support rigide comporte intérieurement trois secteurs 14a, 14b et 14c. Les secteurs de succion 14a, 14b et 14c sont séparés par des cloisons étanches 16 et sont chacun équipés d'une prise d'aspiration 15 distincte raccordée chacune à un dispositif d'aspiration par exemple à l'aide de valves sélectivement activables.

Dans l'exemple visible sur la figure 10, la sectorisation de la chambre de succion est réalisée longitudinalement. Il serait également possible, en variante, de sectoriser la chambre de succion latéralement, ou longitudinalement et latéralement. Comme visible sur cette figure 10, il est également possible de doter la chambre de succion de prises pneumatiques additionnelles 17 optionnelles, illustrées en pointillés, pour sélectivement créer une surpression dans chaque secteur de succion 14a, 14b et 14c pour le détachement d'une zone d'un patch.

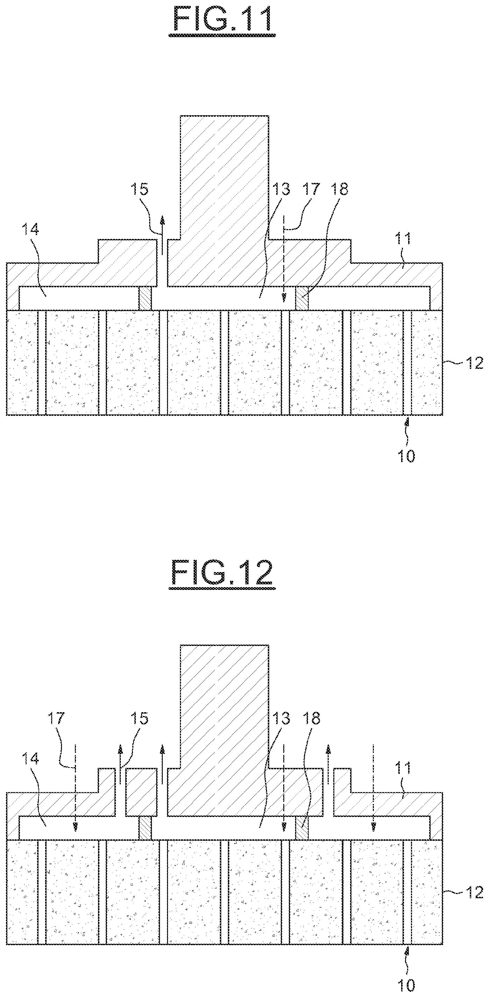

En variante, dans le mode de réalisation de la figure 11, la chambre 13 est sectorisée au moyen de clapets 18 pilotés, ici fictivement au nombre de deux, de manière à créer dans la chambre 13 trois secteurs de succion 14a, 14b et 14c.

Dans ce mode de réalisation, la chambre comporte une seule prise d'aspiration 15 et une seule prise pneumatique de surpression 17 optionnelle.

Ce mode de réalisation est particulièrement adapté pour sectoriser la chambre de succion en fonction de la taille et de la géométrie des patchs à saisir en activant soit le secteur de succion central, soit le secteur de succion central et l'un des secteurs de succion latéraux, soit encore en activant les trois secteurs de succion.

Dans le mode de réalisation de la figure 12, qui est par ailleurs identique au mode de réalisation de la figure 11 en ce que la chambre de succion 13 est sectorisée au moyen de clapets pilotés 18, chaque secteur de succion est doté d'une prise d'aspiration 15 combinée le cas échéant, à une prise de surpression 17 optionnelle afin, d'une part, lors de l'aspiration, de conformer la chambre de succion à la forme et à la taille du patch, et de libérer successivement et sélectivement chaque zone du patch en fonction du déroulement de la phase d'application du patch contre la surface cible.

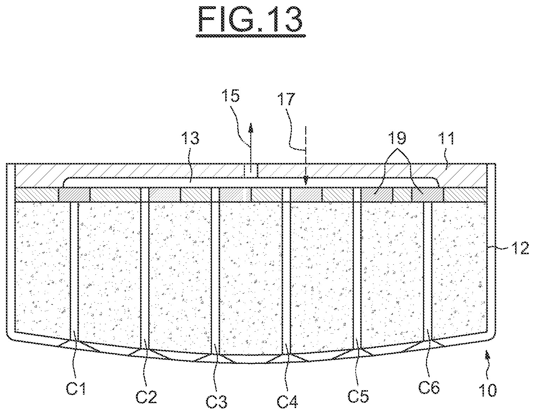

Enfin, dans le mode de réalisation de la figure 13, la tête de préhension comporte une seule chambre de succion. La sectorisation du préhenseur s'effectue au moyen de clapets 19 ou valves, par exemple placés du côté amont de chaque canal du préhenseur, afin de permettre de sélectivement fermer ou ouvrir chaque canal.

Sur la figure 13, les canaux d'extrémité C1 et C6 sont fermés, tandis que les canaux C3 à C5 sont ouverts.

Bien entendu, les modes de réalisation décrits en référence aux figures 10 à 13 peuvent éventuellement être combinés.

Dans le mode de réalisation de la figure 10, la chambre de succion comporte plusieurs secteurs desservis chacun par une prise d'aspiration et associés chacun à un nombre prédéterminé de canaux ou alvéoles.

Dans le mode de réalisation des figures 11 et 12, la sectorisation des zones de préhension s'effectue en sectorisant la chambre de succion dont la taille est adaptée en ouvrant et en fermant sélectivement les clapets.

Enfin, dans le mode de réalisation de la figure 13, la sectorisation des zones de préhension s'effectue en agissant sélectivement sur les clapets ou vannes équipant les alvéoles ou canaux du préhenseur.

On pourrait par exemple, en variante, prévoir que la sectorisation s'effectue en agissant sur des prises d'aspiration agissant chacune sur un secteur de succion ou en pilotant à l'ouverture et à la fermeture des vannes pour configurer le volume interne utile de la chambre de succion, notamment pour adapter la zone de préhension du préhenseur à la taille du patch et en agissant sur des clapets ou vannes équipant les canaux du préhenseur en fonction du déplacement du préhenseur.

Dans les divers modes de réalisation décrits précédemment, le pilotage des clapets s'effectue par programmation, soit par asservissement.

Les zones de préhension du bloc 12 de matériau élastiquement déformable peuvent être commandées par exemple au moyen d'un ou plusieurs éléments de mesure de pression, par exemple des capteurs 20 (figure 10) mesurant la pression et la dépression dans les prises d'aspiration, ou en fonction de l'effort appliqué par la tête de préhension sur le patch, au moyen de capteurs d'effort 21 par exemple répartis à l'interface entre le bloc 12 et le support.

Enfin, les zones de préhension peuvent être sélectivement actives à partir de données de pilotage de la tête de préhension. Il peut s'agir de données issues du programme qui commande le déplacement de la tête, par exemple relatives à la position de la tête ou à la configuration du patch que la tête est destinée à saisir.

Comme indiqué précédemment, la tête de préhension peut avantageusement être utilisée pour la préhension et l'application de patchs de différentes dimensions en activant ou en désactivant les zones de préhension selon les caractéristiques géométriques des patchs, seules les zones recouvertes d'un patch étant activées.

## Revendications

1. Tête de préhension pour la préhension d'une pièce et le dépôt de la pièce sur une surface cible, comprenant une chambre de succion (13) délimitant au moins un secteur de succion (14) et raccordée à au moins une prise d'aspiration (15) et une pièce de matériau élastiquement déformable configurée pour la préhension de la pièce sous l'effet d'une dépression créée dans ladite chambre de succion, la pièce de matériau élastiquement déformable comporte des zones de préhension activables sélectivement et en ce que la tête de préhension comporte des moyens (15, 17) pour activer sélectivement les zones de préhension, le ou chaque secteur de succion est raccordé à au moins une prise de surpression (17), la pièce de matériau élastiquement déformable comportant un réseau de canaux (C1, C2, C3, C4, C5, C6) en communication avec la chambre de succion, chaque canal étant doté d'un clapet (19) sélectivement piloté à l'ouverture et à la fermeture.

2. Tête de préhension selon la revendication 1, dans laquelle la chambre de succion comprend plusieurs secteurs de succion (14) séparés raccordés chacun à une prise d'aspiration (15), les secteurs de succion étant séparés par des cloisons étanches (16).

3. Tête de préhension selon la revendication 1, dans laquelle la chambre de succion comporte plusieurs secteurs de succion (14) séparés par des clapets (18) pilotés à l'ouverture et à la fermeture pour sélectivement mettre en communication les secteurs de succion.

4. Tête de préhension selon l'une quelconque des revendications 1 à 3, dans laquelle la tête de préhension comporte un ensemble d'au moins un élément (21) de mesure de la pression d'application de la tête de préhension sur la surface cible pour l'asservissement de la pression d'application de la tête de préhension.

5. Tête de préhension selon l'une quelconque des revendications 1 à 4, dans laquelle les moyens pour activer sélectivement les zones de préhension comportent des moyens pour sélectivement activer les zones de préhension en fonction du niveau de pression du fluide régnant dans les secteurs de succion.

6. Tête de préhension selon l'une quelconque des revendications 1 à 5, dans laquelle les moyens pour activer sélectivement les zones de préhension comportent des moyens (15, 17) pour sélectivement activer les secteurs de succion à partir de données de pilotage de la tête de succion.

7. Tête de préhension selon d'une quelconque des revendications 1 à 6, dans laquelle la pièce est un patch destiné à être appliqué contre une surface à draper.

8. Tête de préhension selon l'une quelconque des revendications 1 à 7, dans laquelle les moyens pour activer sélectivement les zones de préhension comportent des moyens (15, 17) pour activer les secteurs de succion en fonction de la position de la tête ou de la configuration de la pièce.

9. Machine de drapage de pièce à draper, **caractérisée en ce qu'**elle comporte une tête de préhension selon l'une quelconque des revendications 1 à 8.

## Patentansprüche

1. Greifkopf zum Greifen eines Teils und zum Ablegen des Teils auf einer Zielfläche, umfassend eine Saugkammer (13), die mindestens einen Saugsektor (14) begrenzt und mit mindestens einem Sauganschluss (15) verbunden ist, und ein Teil aus elastisch verformbarem Material, das für das Greifen des Teils unter der Wirkung eines in der Saugkammer erzeugten Unterdrucks konfiguriert ist, wobei das Teil aus elastisch verformbarem Material selektiv aktivierbare Greifbereiche aufweist und der Greifkopf Mittel (15, 17) zum selektiven Aktivieren der Greifbereiche aufweist, wobei der oder jeder Saugsektor mit mindestens einem Überdruckanschluss (17) verbunden ist, wobei das Teil aus elastisch verformbarem Material ein Kanalnetz (C1, C2, C3, C4, C5, C6) in Verbindung mit der Saugkammer aufweist, wobei jeder Kanal mit einer Klappe (19) ausgestattet ist, die bei dem Öffnen und Schließen selektiv angesteuert wird.

2. Greifkopf nach Anspruch 1, wobei die Saugkammer mehrere getrennte Saugsektoren (14) umfasst, die jeweils mit einem Sauganschluss (15) verbunden sind, wobei die Saugsektoren durch dichte Trennwände (16) getrennt sind.

3. Greifkopf nach Anspruch 1, wobei die Saugkammer mehrere Saugsektoren (14) aufweist, die durch Klappen (18) getrennt sind, die bei dem Öffnen und Schließen angesteuert werden, um die Saugsektoren selektiv miteinander in Verbindung zu bringen.

4. Greifkopf nach einem der Ansprüche 1 bis 3, wobei der Greifkopf eine Baugruppe aus mindestens einem Element (21) zum Messen des Anpressdrucks des Greifkopfs auf die Zielfläche zu der Steuerung des Anpressdrucks des Greifkopfs aufweist.

5. Greifkopf nach einem der Ansprüche 1 bis 4, wobei die Mittel zum selektiven Aktivieren der Greifbereiche Mittel zum selektiven Aktivieren der Greifbereiche in Abhängigkeit von dem Druckniveau des in den Saugsektoren herrschenden Fluids aufweisen.

6. Greifkopf nach einem der Ansprüche 1 bis 5, wobei die Mittel zum selektiven Aktivieren der Greifbereiche Mittel (15, 17) zum selektiven Aktivieren der Saugsektoren anhand von Steuerdaten des Saugkopfs aufweisen.

7. Greifkopf nach einem der Ansprüche 1 bis 6, wobei das Teil ein Patch ist, das zum Aufbringen auf eine zu bedeckende Oberfläche bestimmt ist.

8. Greifkopf nach einem der Ansprüche 1 bis 7, wobei die Mittel zum selektiven Aktivieren der Greifbereiche Mittel (15, 17) zum Aktivieren der Saugsektoren in Abhängigkeit von der Position des Kopfs oder der Konfiguration des Teils aufweisen.

9. Drapiermaschine für zu drapierende Teile, **dadurch gekennzeichnet, dass** sie einen Greifkopf nach einem der Ansprüche 1 bis 8 aufweist.

## Claims

1. Gripping head for gripping a part and depositing the part onto a target surface, comprising a suction chamber (13) delimiting at least one suction sector (14) and connected to at least one suction intake (15), and a piece of elastically deformable material configured to grip the part under the effect of a vacuum created in said suction chamber, the piece of elastically deformable material includes selectively activatable gripping zones, and in that the gripping head includes means (15, 17) for selectively activating the gripping zones, the or each suction sector being connected to at least one overpressure intake (17), the piece of elastically deformable material including a network of channels (C1, C2, C3, C4, C5, C6) in communication with the suction chamber, each channel being fitted with a valve (19) that is selectively controlled for opening and closing.

2. Gripping head according to claim 1, wherein the suction chamber comprises a plurality of separate suction sectors (14), each connected to a suction intake (15), with the suction sectors being separated by sealed partitions (16).

3. Gripping head according to claim 1, wherein the suction chamber includes several suction sectors (14) separated by valves (18) controlled to open and close in order to selectively connect the suction sectors.

4. Gripping head according to any one of claims 1 to 3, wherein the gripping head includes an assembly of at least one element (21) for measuring the application pressure of the gripping head on the target surface for controlling the application pressure of the gripping head.

5. Gripping head according to any one of claims 1 to 4, wherein the means for selectively activating the gripping zones include means for selectively activating the gripping zones depending on the pressure level of the fluid prevailing in the suction sectors.

6. Gripping head according to any one of claims 1 to 5, wherein the means for selectively activating the gripping zones include means (15, 17) for selectively activating the suction sectors based on control data of the suction head.

7. Gripping head according to any one of claims 1 to 6, wherein the part is a patch intended to be applied to a surface to be draped.

8. Gripping head according to any one of claims 1 to 7, wherein the means for selectively activating the gripping zones include means (15, 17) for activating the suction sectors depending on the position of the head or the configuration of the part.

9. Machine for draping a part to be draped, **characterised in that** it includes a gripping head according to any one of claims 1 to 8.
